# EUROPÄISCHE PATENTANMELDUNG

(11) **EP 1 315 008 A2**
(43) Veröffentlichungstag der Anmeldung: **28.05.2003**
(21) Anmeldenummer: 02025623.6
(22) Anmeldetag: 19.11.2002
(51) Int. Cl.: G02B 6/42

(54) **Optoelektronische Baugruppe**

(30) Priorität: 22.11.2001 DE 10157201
(71) Anmelder: Harting Elektro-Optics GmbH & Co. KG., 32339 Espelkamp (DE)
(72) Erfinder: Burmeister, Michael, Dr., 32429 Minden (DE); Gerdom, Karl, Dr., 32312 Lübbecke (DE); Hartmann, Frank-Ulrich, 32257 Bünde (DE)
(74) Vertreter: Sties, Jochen, Dipl.-Ing.

(57) **Zusammenfassung**

Eine optoelektronische Baugruppe (10) mit einem Träger (12), einem optoelektronischen Bauteil (16), das auf dem Träger (12) angebracht ist, und mindestens einer Führung (28) für einen mit der Baugruppe optisch koppelbaren Lichtwellenleiterstecker (5), ist dadurch gekennzeichnet, daß ein Wärmeableitelement (26; 32) vorgesehen ist, das mit dem optoelektronischen Bauteil (16) in gut wärmeleitender Verbindung steht, und daß die Führung (28) in dem Wärmeableitelement (26; 32) ausgebildet ist.

## Beschreibung

Die Erfindung betrifft eine optoelektronische Baugruppe mit einem Träger, einem optoelektronischen Bauteil, das auf dem Träger angebracht ist, und mindestens einer Führung für einen mit der Baugruppe optisch koppelbaren Lichtwellenleiterstecker.

Eine solche Baugruppe ist aus der PCT-Offenlegungsschrift WO 94/28448 bekannt. Als Führung werden dort zwei Bohrungen verwendet, die entweder unmittelbar im optoelektronischen Bauteil oder aber in dem Träger für das optoelektronische Bauteil ausgebildet sind. Die Führungsbohrungen dienen zur Aufnahme von Führungsstiften eines Lichtwellenleitersteckers, beispielsweise eines MT-Steckers, dessen Lichtwellenleiter mit den aktiven Flächen des optoelektronischen Bauteils gekoppelt werden sollen.

Um bei der Kopplung zwischen Lichtwellenleiterstecker und optoelektronischem Bauteil geringe Dämpfungsverluste zu erhalten, ist die präzise Positionierung des Lichtwellenleitersteckers relativ zum optoelektronischen Bauteil wichtig. Wenn die Führungsbohrungen für den Lichtwellenleiterstecker unmittelbar am optoelektronischen Bauteil vorgesehen sind, läßt sich eine sehr hohe Genauigkeit erhalten. Nachteilig ist jedoch der vergleichsweise hohe Aufwand. Zum einen muß das optoelektronische Bauteil, üblicherweise ein Halbleiterchip, mit so großen Abmessungen ausgeführt werden, daß überhaupt genug Platz vorhanden ist, um die Führungsbohrungen auszubilden. Weiterhin muß der Halbleiterchip mechanisch ausreichend widerstandsfähig sein, um die beim Einstecken des Lichtwellenleitersteckers auftretenden Kräfte aufnehmen zu können. Wenn die Führungsbohrungen im Träger des optoelektronischen Bauteils ausgebildet werden, müssen hohe Anforderungen an die mechanische Festigkeit des Materials des Trägers gestellt werden, da die Führungsbohrungen auch durch ein wiederholtes Ein- und Ausstecken des Lichtwellenleitersteckers nicht derart verschleißen dürfen, daß ein Spiel zwischen den Führungsbohrungen und den Führungsstiften auftritt; andernfalls würden übermäßig hohe Dämpfungsverluste entstehen.

Die Aufgabe der Erfindung besteht darin, eine Baugruppe der eingangs genannten Art dahingehend weiterzubilden, daß bei der Auswahl des Materials des Trägers für das optoelektronische Bauelement keine übermäßig hohen Anforderungen eingehalten werden müssen.

Zu diesem Zweck ist erfindungsgemäß ein Wärmeableitelement vorgesehen, das mit dem optoelektronischen Bauteil in gut wärmeleitender Verbindung steht, wobei die Führung an dem Wärmeableitelement ausgebildet ist. Das Wärmeableitelement, das im Hinblick auf eine hohe Wärmeleitfähigkeit üblicherweise aus Metall besteht, bietet beste Voraussetzungen für die Ausgestaltung einer präzisen und verschleißfesten Führung, insbesondere für eine Führungsbohrung. Eine solche Führungsbohrung kann mit geringem Aufwand als Paßbohrung ausgebildet werden, in die ein Führungsstift eines Lichtwellenleitersteckers spielfrei eingesteckt werden kann. Da die Führung an dem Wärmeableitelement ausgebildet ist, muß bei der Auswahl des Trägers für das optoelektronische Bauelement keinerlei Rücksicht darauf genommen werden, ob das Material für die Führung des Lichtwellenleitersteckers geeignet ist. Somit kann als Träger insbesondere eine flexible Leiterfolie verwendet werden, die aufgrund ihrer Elastizität nicht geeignet ist, die Führungsstifte eines Lichtwellenleitersteckers präzise zu führen.

Gemäß einer bevorzugten Ausführungsform der Erfindung ist vorgesehen, daß die aktive Fläche des optoelektronischen Bauteils dem Träger zugewandt ist. Vorzugsweise ist dabei der Träger eine flexible Leiterfolie oder eine Leiterplatte, so daß das optoelektronische Bauelement mit der Flip-Chip-Technik montiert werden kann. Dadurch steht die gesamte Rückseite des optoelektronischen Bauelements für die Verbindung mit dem Wärmeableitelement zur Verfügung, so daß eine gute Wärmeabfuhr gewährleistet ist. Gleichzeitig ergibt sich eine gute elektrische HF-Schirmung des optoelektronischen Bauelements und seiner Kontaktbereiche durch seine Anordnung zwischen der Leiterplatte bzw. der Leiterfolie und dem Wärmeableitelement.

Wenn die aktive Fläche des optoelektronischen Bauteils dem Träger zugewandt ist, kann der Träger optisch transparent ausgeführt sein. Vorzugsweise ist jedoch in dem Träger gegenüber der aktiven Fläche des optoelektronischen Bauteils mindestens eine Aussparung vorgesehen, die mit einem optisch transparenten Material vergossen ist. Auf diese Weise ist das optoelektronische Bauelement mechanisch gegen äußere Einflüsse geschützt. Wenn das optoelektronische Bauteil mehrere aktive Flächen aufweist, kann eine gemeinsame Aussparung für alle aktiven Flächen vorgesehen sein. Vorzugsweise ist jedoch für jede aktive Fläche eine individuelle Aussparung vorgesehen, so daß ein optisches Übersprechen zwischen den nebeneinanderliegenden aktiven Flächen, also den optischen Kanälen, verhindert ist.

Gemäß einer bevorzugten Ausführungsform der Erfindung ist ein Kühlkörper vorgesehen, wobei das Wärmeableitelement eine gut wärmeleitende Zwischenplatte aus Metall ist, deren Wärmeausdehnungskoeffizient etwa demjenigen des optoelektronischen Bauteils entspricht. Bei dieser Ausführungsform hat das Wärmeableitelement eine doppelte Funktion: Zum einen verringert es temperaturbedingte mechanische Spannungen zwischen dem optoelektronischen Bauelement und dem Wärmeableitelement, da der Wärmeausdehnungskoeffizient der Zwischenplatte an denjenigen des optoelektronischen Bauteils angepaßt ist. Zum anderen dient das Wärmeableitelement zur Führung des Führungsstiftes des Lichtwellenleitersteckers. Gemäß einer anderen bevorzugten Ausführungsform kann dagegen vorgesehen sein, daß das Wärmeableitelement ein Kühlkörper ist und daß zwischen dem Kühlkörper und dem optoelektronischen Bauteil eine Zwischenplatte aus Metall angeordnet ist, deren Wärmeausdehnungskoeffizient etwa demjenigen des optoelektronischen Bauteils entspricht.

Vorzugsweise ist vorgesehen, daß die Zwischenplatte mit Positionierungsgestaltungen versehen ist, die in korrespondierende Positionierungsgestaitungen des Kühlkörpers eingreifen. Dies gewährleistet, daß der Kühlkörper und die Zwischenplatte passiv mit großer Genauigkeit relativ zueinander angeordnet werden.

Gemäß einer bevorzugten Ausführungsform der Erfindung ist vorgesehen, daß der Träger eine Vertiefung aufweist, deren Tiefe etwa der Dicke des optoelektronischen Bauteils entspricht, und daß das optoelektronische Bauteil in der Vertiefung angeordnet ist. Auf diese Weise wird ein besonders kompakter Aufbau erzielt. Außerdem ergibt sich eine große mechanische Stabilität, da das mit dem optoelektronischen Bauelement verbundene Wärmeableitelement flächig auf dem Träger aufliegen kann.

Vorteilhafte Ausgestaltungen der Erfindung ergeben sich aus den Unteransprüchen.

Die Erfindung wird nachfolgend anhand zweier bevorzugter Ausführungsformen beschrieben, die in den beigefügten Zeichnungen dargestellt sind. In diesen zeigen:
- Figur 1 in einer schematischen Schnittansicht eine optoelektronische Baugruppe gemäß einer ersten Ausführungsform der Erfindung mit angestecktem Lichtwellenleiterstecker;
- Figur 2 in einer schematischen, abgebrochenen Ansicht einen Schnitt entlang der Ebene II-II von Figur 1; und
- Figur 3 in einer schematischen Schnittansicht eine optoelektronische Baugruppe gemäß einer zweiten Ausführungsform der Erfindung mit angestecktem Lichtwellenleiterstecker.

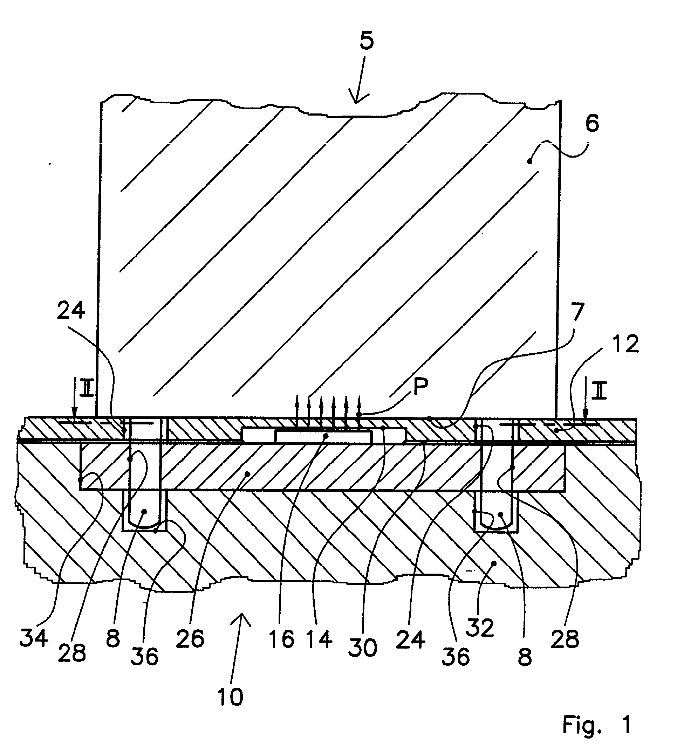

In Figur 1 ist eine optoelektronische Baugruppe 10 gezeigt, an die ein Lichtwellenleiterstecker 5 angesteckt ist. Der Lichtwellenleiterstecker 5 enthält ein Gehäuse 6, in welchem mehrere (nicht dargestellte) Lichtwellenleiter so angeordnet sind, daß ihre Stirnflächen an einer Vorderseite 7 des Gehäuses freiliegen. Von der Vorderseite 7 des Gehäuses 6 stehen zwei Führungsstifte 8 ab, die bezogen auf die Stirnflächen der Lichtwellenleiter räumlich präzise angeordnet sind. Ein Beispiel für einen solchen Lichtwellenleiterstecker 5 ist ein sogenannter MT-Stecker.

Die optoelektronische Baugruppe 10 enthält einen Träger 12, der eine Leiterplatte oder eine flexible Leiterfolie sein kann. Der Träger 12 ist mit einer Vertiefung 14 versehen, in der ein optoelektronisches Bauelement 16 angeordnet ist. Das optoelektronische Bauelement ist vorzugsweise ein Halbleiterchip, auf dem mehrere lichtempfindliche Elemente (Photodetektoren) und mehrere lichtabgebende Elemente ausgebildet sind, insbesondere oberflächenemittierende Laser (VCSEL). Das optoelektronische Bauelement ist durch Flip-Chip-Montage so auf dem Träger 12 angebracht, daß seine aktiven Flächen (hier symbolisiert durch die Pfeile P) dem Träger 12 zugewandt sind und seine Anschlußflächen mit den Leiterbahnen der Leiterplatte bzw. flexiblen Leiterfolie elektrisch leitend verbunden sind.

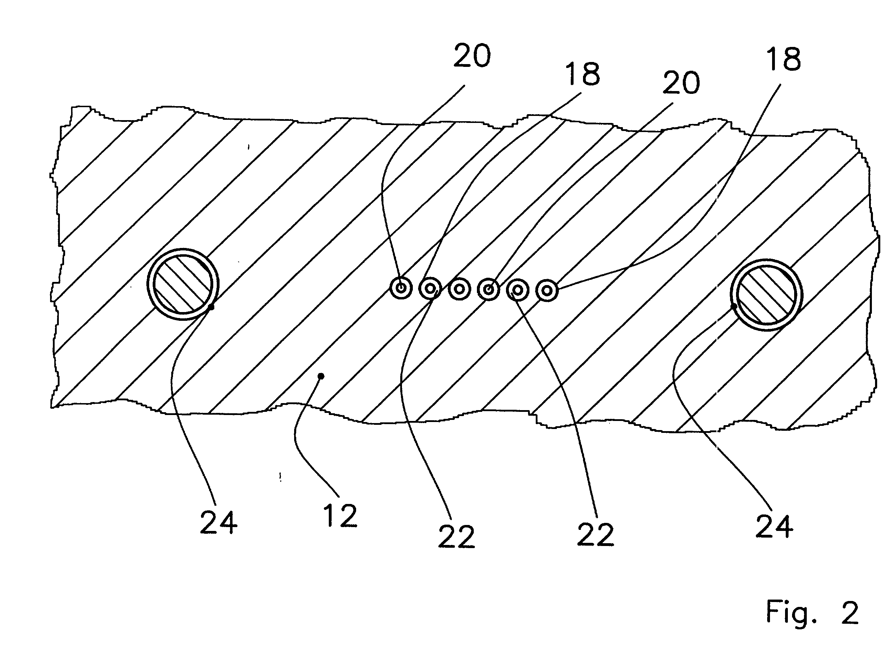

Der Träger 12 ist mit mehreren kreisförmigen Aussparungen 18 versehen (siehe Figur 2), die jeweils einer aktiven Fläche 20 des optoelektronischen Bauelements 16 zugeordnet sind. Jede Aussparung 18 ist mit einer optisch transparenten Vergußmasse 22 vergossen, so daß das optoelektronische Bauelement 16 mechanisch gegen Verunreinigungen und Beschädigungen geschützt ist. Im Träger 12 sind schließlich zwei Öffnungen 24 ausgebildet, deren Funktion später erläutert wird. Der Durchmesser der Öffnungen 24 ist größer als der Durchmesser der Führungsstifte 8 des Lichtwellenleitersteckers 5.

Auf der von den aktiven Flächen 20 abgewandten Rückseite des optoelektronischen Bauelements 16 ist eine als Wärmeableitelement wirkende Zwischenplatte 26 angeordnet, die mit dem optoelektronischen Bauelement 16 in gut wärmeleitender Verbindung steht. Die Zwischenplatte 16 kann zu diesem Zweck mit dem optoelektronischen Bauelement 16 verlötet oder verklebt sein. Die Zwischenplatte 26 besteht aus einem Material, dessen Wärmeausdehnungskoeffizient an denjenigen des optoelektronischen Bauelements 16 angepaßt ist, beispielsweise Silicium-Karbid oder eine Kupfer-Wolfram-Legierung. Die Zwischenplatte 26 ist mit Führungen in der Form von Führungsbohrungen 28 versehen, welche die Führungsstifte 8 des Lichtwellenleitersteckers 5 aufnehmen können. Der Abstand der Führungsbohrungen 28 voneinander entspricht exakt dem Abstand der Führungsstifte 8 voneinander.

Da das optoelektronische Bauelement 16 in der Vertiefung 14 des Trägers 12 angeordnet ist, kann die Zwischenplatte 26 flächig mit dem Träger 12 verbunden werden, beispielsweise durch eine Klebstoffschicht 30. Auf diese Weise ergibt sich eine hohe mechanische Festigkeit.

An der vom optoelektronischen Bauelement 16 abgewandten Rückseite der Zwischenplatte 26 ist ein Kühlkörper 32 angeordnet, der mit der Zwischenplatte 26 in gut wärmeleitender Verbindung steht. Bei der gezeigten Ausführungsform ist der Kühlkörper 32 mit einer Aufnahme 34 für die Zwischenplatte 26 versehen, so daß diese paßgenau aufgenommen ist. Es ist alternativ auch möglich, die Zwischenplatte 26 und den Kühlkörper 32 mit beispielsweise mittig angeordneten Positionierungsgestaltungen zu versehen, die ineinander eingreifen, während seitlich der Zwischenplatte ein Spalt vorgesehen ist. Auf diese Weise können Spannungen durch die unterschiedliche Wärmeausdehnung von Kühlkörper und Zwischenplatte verringert werden. Der Kühlkörper 32 ist mit Vertiefungen 36 versehen, die hinter den Führungsbohrungen 28 der Zwischenplatte 26 angeordnet sind. Der Durchmesser der Vertiefungen 36 ist größer als der Durchmesser der Führungsstifte 8 des Lichtwellenleitersteckers.

Die optoelektronische Baugruppe 10 wird in der folgenden Weise montiert: Zuerst werden in der Zwischenplatte 26 die Führungsbohrungen 28 ausgebildet. Dies kann durch Stanzen erfolgen. Wenn an der optoelektronischen Baugruppe ein MT-Stecker angebracht werden soll, müssen hinsichtlich des Durchmessers der Führungsbohrungen Toleranzen von ±1 µm und hinsichtlich des Abstandes der Führungsbohrungen voneinander Toleranzen von ±3 µm eingehalten werden. Nach der Herstellung der Führungsbohrungen wird das optoelektronische Bauelement 16 so an der Zwischenplatte 26 angeordnet, daß die optisch aktiven Flächen des optoelektronischen Bauelementes präzise relativ zu den Führungsbohrungen 28 angeordnet sind. Auch hierbei sollten Toleranzen von ± 1 µm eingehalten werden. Für die Positionierung des optoelektronischen Bauelements 16 sind insbesondere aktive optische Systeme geeignet. Nach der präzisen Positionierung des optoelektronischen Bauelements wird dieses mit der Zwischenplatte 26 verlötet.

Die so gebildete Unterbaugruppe wird auf dem Träger 12 angeordnet, der vorher mit den Aussparungen 18 sowie den Öffnungen 24 versehen wurde. Die bei der Anordnung der aus dem optoelektronischen Bauelement 16 und der Zwischenplatte 26 gebildeten Unterbaugruppe an den Träger 12 einzuhaltenden Toleranzen sind im wesentlichen dadurch bestimmt, daß die elektrischen Kontaktflächen des optoelektronischen Bauelements 16 den Bondflächen des Trägers 12 korrekt zugeordnet sein müssen. Für die gegenseitige Ausrichtung kann wieder ein aktives optisches System verwendet werden. Nach der Ausrichtung der Unterbaugruppe relativ zum Träger 12 wird das optoelektronische Bauelement 16 in Flip-Chip-Technik mit den Bondflächen des Trägers 12 verlötet. Weiterhin wird die Zwischenplatte 26 mit dem Träger 12 verklebt. Anschließend werden die Aussparungen 18 vergossen, so daß die optisch aktiven Flächen 20 des optoelektronischen Bauelements 16 geschützt sind. Abschließend wird der Kühlkörper 32 angebracht.

Beim Anstecken eines Lichtwellenleitersteckers 5 an die optoelektronische Baugruppe 10 werden die Führungsstifte 8 des Lichtwellenleitersteckers 5 durch die Öffnungen 24 des Trägers 12 hindurch in die Führungsbohrungen 28 der Zwischenplatte 26 eingesteckt. Da der Durchmesser der Öffnungen 24 größer ist als der Durchmesser der Führungsstifte 8, dienen die Öffnungen 24 lediglich als Einführhilfe. Auch der Kühlkörper 32 hat keine Führungsfunktion, da die Vertiefungen 36 einen größeren Durchmesser haben als die Führungsstifte 8.

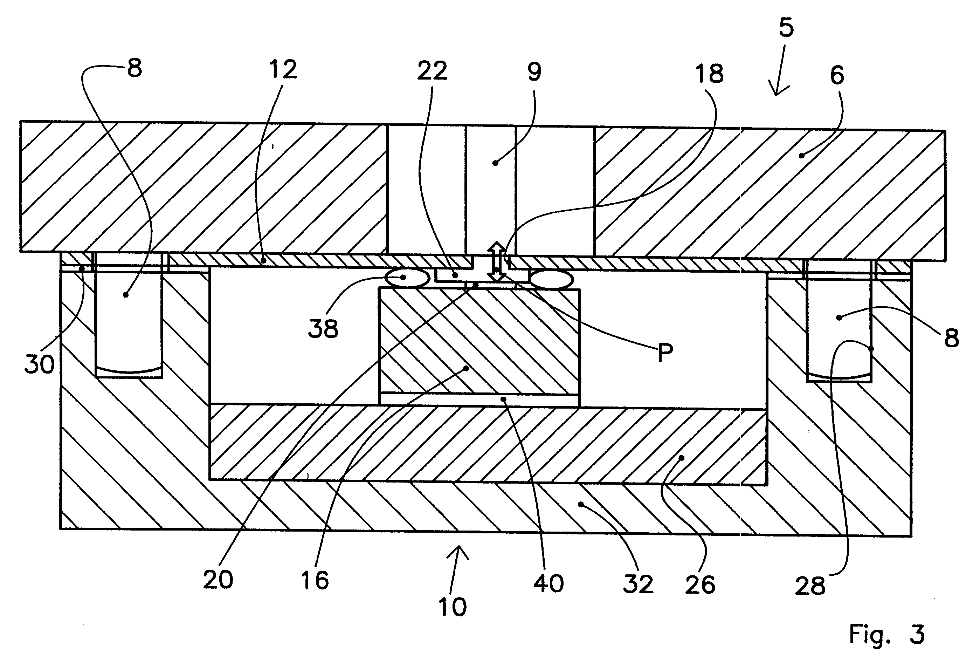

In Figur 3 ist eine optoelektronische Baugruppe 10 gemäß einer zweiten Ausführungsform gezeigt. Für die von der ersten Ausführungsform bekannten Bauteile werden dieselben Bezugszeichen verwendet, und es wird auf die obigen Erläuterungen verwiesen.

In Figur 3 sind die Abmessungen des optoelektronischen Bauelementes extrem vergrößert gegenüber den übrigen Bauteilen gezeigt. Somit ist die aktive Fläche 20 gut erkennbar, die durch die Vergußmasse 22 und die Aussparungen 18 hindurch mit einem Lichtwellenleiter 9 des Lichtwellenleitersteckers 5 gekoppelt ist. Erkennbar sind auch Lotkugeln 38, die zum Verbinden von Anschlußflächen des optoelektronischen Bauteils 16 mit zugeordneten Bondflächen dienen, die an der als Träger 12 verwendeten Leiterfolie ausgebildet sind. Schließlich ist eine Lotschicht 40 zu erkennen, mittels der das optoelektronische Bauelement 16 mit der Zwischenplatte 26 verbunden ist.

Der wesentlichste Unterschied zwischen der ersten und der zweiten Ausführungsform besteht darin, daß die als Führung für die Führungsstifte 8 des Lichtwellenleitersteckers 5 dienenden Führungsbohrungen 28 nicht in der Zwischenplatte 26, sondern im Kühlkörper 32 ausgebildet sind.

### Bezugszeichenliste:

- 5:: Lichtwellenleiterstecker
- 6:: Gehäuse
- 7:: Vorderseite
- 8:: Führungsstift
- 9:: Lichtwellenleiter
- 10:: Optoelektronische Baugruppe
- 12:: Träger
- 14:: Vertiefung
- 16:: Optoelektronisches Bauelement
- 18:: Aussparung
- 20:: Aktive Fläche
- 22:: Vergußmasse
- 24:: Öffnung
- 26:: Zwischenplatte
- 28:: Führungsbohrung
- 30:: Klebstoffschicht
- 32:: Kühlkörper
- 34:: Aufnahme
- 36:: Vertiefung
- 38:: Lotkugel
- 40:: Lotschicht

## Patentansprüche

1. Optoelektronische Baugruppe (10) mit einem Träger (12), einem optoelektronischen Bauteil (16), das auf dem Träger (12) angebracht ist, und mindestens einer Führung (28) für einen mit der Baugruppe optisch koppelbaren Lichtwellenleiterstecker (5), **dadurch gekennzeichnet, daß** ein Wärmeableitelement (26; 32) vorgesehen ist, das mit dem optoelektronischen Bauteil (16) in gut wärmeleitender Verbindung steht, und daß die Führung (28) an dem Wärmeableitelement (26; 32) ausgebildet ist.

2. Optoelektronische Baugruppe nach Anspruch 1, **dadurch gekennzeichnet, daß** die Führung eine Paßbohrung (28) ist, in die ein an dem Lichtwellenleiterstecker (5) angebrachter Führungsstift (8) eingesteckt werden kann.

3. Optoelektronische Baugruppe nach einem der vorhergehenden Ansprüche, **dadurch gekennzeichnet, daß** die aktive Fläche (20) des optoelektronischen Bauteils (16) dem Träger (12) zugewandt ist.

4. Optoelektronische Baugruppe nach Anspruch 3, **dadurch gekennzeichnet, daß** in dem Träger (12) gegenüber der aktiven Fläche (20) des optoelektronischen Bauteils (16) mindestens eine Aussparung (18) vorgesehen ist und daß die Aussparung (18) mit einem optisch transparenten Material (22) vergossen ist.

5. Optoelektronische Baugruppe nach Anspruch 4, **dadurch gekennzeichnet, daß** das optoelektronische Bauteil (16) mehrere aktive Flächen (20) aufweist und für jede aktive Fläche (20) eine individuelle Aussparung (18) vorgesehen ist.

6. Optoelektronische Baugruppe nach Anspruch 4, **dadurch gekennzeichnet, daß** das optoelektronische Bauteil (16) mehrere aktive Flächen (20) aufweist und eine gemeinsame Aussparung für alle aktiven Flächen vorgesehen ist.

7. Optoelektronische Baugruppe nach einem der vorhergehenden Ansprüche, **dadurch gekennzeichnet, daß** ein Kühlkörper (32) vorgesehen ist und daß das Wärmeableitelement eine gut wärmeleitende Zwischenplatte (26) aus Metall ist, deren Wärmeausdehnungskoeffizient etwa demjenigen des optoelektronischen Bauteils (16) entspricht.

8. Optoelektronische Baugruppe nach einem der Ansprüche 1 bis 6, **dadurch gekennzeichnet, daß** das Wärmeableitelement ein Kühlkörper (32) ist und daß zwischen dem Kühlkörper (32) und dem optoelektronischen Bauteil (16) eine Zwischenplatte (26) aus Metall angeordnet ist, deren Wärmeausdehnungskoeffizient etwa demjenigen des optoelektronischen Bauteils (16) entspricht.

9. Optoelektronische Baugruppe nach einem der Ansprüche 7 und 8, **dadurch gekennzeichnet, daß** die Zwischenplatte (26) mit Positionierungsgestaltungen versehen ist, die in korrespondierende Positionierungsgestaltungen des Kühlkörpers eingreifen.

10. Optoelektronische Baugruppe nach einem der vorhergehenden Ansprüche, **dadurch gekennzeichnet, daß** der Träger (12) eine flexible Leiterfolie mit Bondflächen ist, die mit Anschlußflächen des optoelektronischen Bauteils (16) verlötet sind.

11. Optoelektronische Baugruppe nach Anspruch 2 und Anspruch 10, **dadurch gekennzeichnet, daß** die flexible Leiterfolie mit einer Öffnung (24) versehen ist, deren Durchmesser größer ist als der Durchmesser der Paßbohrung (28).

12. Optoelektronische Baugruppe nach einem der Ansprüche 10 und 11, **dadurch gekennzeichnet, daß** die flexible Leiterfolie zusammen mit dem Wärmeableitelement (26; 32) eine HF-Schirmung für das optoelektronische Bauteil bildet.

13. Optoelektronische Baugruppe nach einem der vorhergehenden Ansprüche, **dadurch gekennzeichnet, daß** der Träger (12) eine Vertiefung (14) aufweist, deren Tiefe etwa der Dicke des optoelektronischen Bauteils (16) entspricht, und daß das optoelektronische Bauteil (16) in der Vertiefung angeordnet ist.
